# EUROPÄISCHE PATENTSCHRIFT

(11) **EP 1 350 366 B1**
(45) Veröffentlichungstag und Bekanntmachung des Hinweises auf die Patenterteilung: **19.03.2008**
(21) Anmeldenummer: 01982472.1
(22) Anmeldetag: 21.11.2001
(51) Int. Cl.: H04L 12/28, G08C 19/28

(54) **VERFAHREN UND VORRICHTUNG ZUR STEUERUNG VON HAUSGERÄTEN**
METHOD AND DEVICE FOR CONTROLLING DOMESTIC APPLIANCES
PROCEDE ET DISPOSITIF DE COMMANDE D'APPAREILS ELECTROMENAGERS

(30) Priorität: 29.12.2000 DE 10065674
(43) Veröffentlichungstag der Anmeldung: 08.10.2003
(73) Patentinhaber: BSH Bosch und Siemens Hausgeräte GmbH, 81739 München (DE)
(72) Erfinder: MOSCHÜTZ, Harald, 14979 Grossbeeren (DE); BÖLDT, Frank, 14656 Brieselang (DE)
(86) Internationale Anmeldenummer: PCT/EP2001/012942
(87) Internationale Veröffentlichungsnummer: WO 2002/054676

(56) Entgegenhaltungen:
- WO-A-00/75774
- WO-A-99/65192
- US-A- 6 049 671
- US-A- 6 052 750

## Beschreibung

Die vorliegende Erfindung betrifft ein Verfahren zur Steuerung von Hausgeräten, eine dementsprechende Vorrichtung und ein Steuerungssystem.

Bisherige Hausgeräte besitzen in Steuereinheiten elektrische und/oder elektronische Steuerungen, die einen gesamten Funktionsumfang des Gerätes darstellen. Bei einer Erweiterung des Umfangs der in dem Hausgerät ausführbaren Funktionen wird die Steuereinheit entsprechend hard- und/oder softwaremäßig angepaßt. Eine Aktualisierung der Programmablaufsteuerung setzt, wie eine Reparatur, die Anwesenheit eines Kundendiensttechnikers am Standort des Hausgerätes voraus. Ferner ist sie in der Regel mit dem Öffnen des Hausgerätes sowie einem Austausch von Steuerungskomponenten durch den Kundendiensttechniker verbunden. Eine Anpassung von Hausgeräten beim Kunden oder eine nachträgliche Verbesserung der Geräteeigenschaften wegen eines zwischenzeitlich eingetretenen wissenschaftlichen und/oder technischen Fortschritts ist aufgrund dieses Aufwandes auch bei moderneren Hausgeräten kaum möglich. Damit veralten die Hausgeräte aufgrund eines beschränkten Umfangs ihrer Funktionen und ihrer Unfähigkeit zur Anpassung an neue Umgebungs- und/oder Anwendungsparameter, beispielsweise spezielle Maßnahmen zum Wasser- und Stromeinsparen, Verwendung neuartiger Waschsubstanzen oder Anwendung des Hausgerätes auf neue Produkte, sehr schnell.

Es ist daher Aufgabe der vorliegenden Erfindung, ein Verfahren, und eine dementsprechende Vorrichtung zur verbesserten Bereitstellung aktueller Steuerungen für Hausgeräte zu schaffen.

Diese Aufgabe wird erfindungsgemäß durch ein Verfahren mit den Merkmalen von Anspruch 1 und durch eine Vorrichtung mit den Merkmalen von Anspruch 21 gelöst. Vorteilhafte Weiterbildungen der Erfindung sind Gegenstand der jeweiligen Unteransprüche.

Ein erfindungsgemäßes Verfahren zur Steuerung eines Hausgerätes sieht vor, daß ein Hausgerät mit einem lokalen Netzwerk in Verbindung steht. Als Teil eines solchen Netzwerkes ist das Hausgerät zum Versand und Empfang von Informationen ausgebildet. Nach einer Anforderung durch einen Anwender bzw. Benutzer des Hausgerätes empfängt das Hausgerät erfindungsgemäß eine Steuerungsinformation aus dem Netzwerk, die am Standort zur Steuerung des Hausgerätes ausgewertet und/oder umgesetzt wird. Durch die Anbindung des Hausgeräts an ein lokales Netz kann das Hausgerät alle Eigenschaften nutzen, die in dem lokalen Netz durch die sonstigen mit dem Netz verbundenen Geräte vorhanden sind. Im wesentlichen betrifft das die Aufbereitung der Daten, die nun unter Nutzung einer Netzstruktur nicht mehr zwingend in dem Hausgerät selber, sondern nur noch am Standort des Hausgerätes erfolgt, d.h. innerhalb des lokalen Netzes. Die Steuerungsinformation wird dann über das lokale Netz nur in elektronischer Form übersandt. Damit ist zur Änderung und/oder Erweiterung der Steuerungseigenschaften eines Hausgerätes der Eingriff eines Kundendiensttechnikers vor Ort nicht mehr erforderlich. Die Steuerungsinformation besteht nur noch aus Maschinenbefehlen und/oder Software, die sich auch ohne Eingriff des Benutzers an dem Hausgerät auswirkt. Die dafür zu verarbeitenden Datenmengen sind erfahrungsgemäß relativ gering, d.h. sie sind in ihrem Umfang wesentlich geringer, als dies z.B. bei der Übertragung von Musik oder Bildern der Fall ist. Da eine Übertragung in Echtzeit nicht zwingend erforderlich ist, kann zusätzlich eine geringere Datenrate für einen Übertragungsstandard zugrunde gelegt werden, was eine Umsetzung sehr preiswert gestalten kann.

Ein System zur Vernetzung von Hausgeräten an sich ist beispielsweise aus der Produktschrift "Das Siemens Home Electronic System HES" der Siemens Electrogeräte GmbH, München, von 1997 bekannt. Die zentrale Basis für die Steuerung und Benutzung von Hausgeräten als vernetzte Applikationen ist ein PC. Über diesen Computer lassen sich Hausgeräte innerhalb des HES jedoch nur steuern und kontrollieren. Hierzu werden eine Anzahl interner Zustände der angeschlossenen Hausgeräte in dem System abgebildet. Die HES-Applikation ist also rein PC-basiert und damit von einer jeweiligen Plattform abhängig. In keinem Fall werden Informationen zur Steuerung von außen in das lokale Netz hineingelassen, so dass ein HES als lokales Netz auch nicht mit einem externen Dienstanbieter in Kontakt treten kann. Eine Verwendung von Schnittstellen zu einem HES-System ist nicht bekannt.

Ein weiteres System und Methode zur Vernetzung von Hausgeräten ist z.B. aus WO 99/65192 bekannt.

Erfindungsgemäß werden dahingegen Schnittstellen in einem lokalen Netz geschaffen, die auf Anforderung durch den Anwender geöffnet werden. Unterschiedliche Formen der Meldungsversendung und des Informationsempfangs über das lokale Netz und Ausführungsbeispiele für eine Umsetzung von Steuerungsinformationen werden nachfolgend unter Bezug auf Weiterbildungen, verschiedene Ausführungsformen und ein Ausführungsbeispiel noch separat diskutiert.

In einer Weiterbildung der Erfindung wird zur Anforderung einer Steuerungsinformation eine Meldung von dem Hausgerät aus in das lokale Netzwerk ausgesandt. Sie wird vorteilhafterweise durch das lokale Netzwerk an einen Dienstanbieter abgesandt. Zur Erleichterung der Bearbeitung durch den Kunden einerseits und durch den ausführenden Dienstanbieter andrerseits kann die Meldung in Form eines Fragebogens zur nachfolgenden Anfertigung maßgeschneiderter Steuerungsinformationen oder Software ausgebildet sein.

Die Meldung beinhaltet vorzugsweise eine Basisinformation. Als Basisinformation können auch neue Anforderungen des Kunden an ein neues und/oder verbessertes und/oder erweitertes Steuerungsprogramm in der Meldung enthalten sein. Diese Anforderungen können in Form eines Fragebogens oder eines sonstigen Formulars zur maßgeschneiderten Anfertigung von Steuerungsinformationen übermittelt werden. Ein Hersteller von Hausgeräten kann so erfindungsgemäß für einen Kunden nach Kauf eines Hausgerätes als Servicepartner erhalten bleiben. Durch diese Art der nachfolgenden Kundenbetreuung kann auf der Seite des Hausgeräteherstellers auf der Grundlage der Meldungen der Kunden auch Produktweiterentwicklung betrieben werden. Ferner wird durch die Möglichkeit eines fortwährenden Kontaktes die Markentreue der Kunden gestärkt.

Die Meldung wird aus dem lokalen Netzwerk an den Dienstanbieter vorteilhafterweise per Telefon, Fax, eMail oder einen sonstigen Kommunikationskanal zur Sprach- oder Datenübermittlung übersandt. Damit müssen für nach einem erfindungsgemäßen Verfahren arbeitende Vorrichtungen keine zusätzlichen Übertragungswege oder Vorrichtungen aufgebaut werden. Es wird auf vorhandene Vorrichtungen zurückgegriffen bzw. diese werden in das lokale Netz integriert und gemeinsam genutzt.

Die jeweils erforderliche Steuerungsinformation wird als Programm unter Berücksichtigung aller übermittelten Systemdaten und sonstigen Einstellungen sowie Anforderungen des Anwenders entwickelt. Insbesondere findet diese Entwicklung bei einem Dienstanbieter unter Abbildung auf einer dementsprechenden virtuellen Maschine statt. Dabei dient ein neuronales Netz vorzugsweise als Entwicklungsumgebung.

In der Steuersoftware für das Hausgerät werden Schnittstellen zu einzelnen Grundfunktionen genormt. Diese Grundfunktionen werden als Teilprogramme ausgebildet und innerhalb von individuell gestalteten Spezialprogrammen oder normalen Steuerungsprogramm wiederholt. Damit müssen diese Bausteine im Fall einer Modifikation nur einmal an den Standort des Hausgerätes übertragen werden, oder sie können durch Kombination mit neuen Programmteilen quasi wiederverwendet werden.

Die Steuerungsinformationen werden in der Form reiner Daten über das lokale Netz an das Hausgerät übermittelt. Vorzugsweise werden die Steuerungsinformationen als maschinennahe Steuerbefehle oder Maschinensprache ausgeführt. In den beispielhaft genannten Formen sind die Steuerungsinformationen sehr kompakt, so daß die gesamte Datenmenge auch hierdurch noch reduziert werden kann. Andrerseits sind maschinennahe Steuerbefehle oder Steuerungsinformationen in einer Maschinensprache von der Steuerung weitgehend direkt verständlich, so daß sie von der Steuerung direkt umgesetzt werden kann. Zur Beschleunigung und Entlastung der Steuerung müssen so also keine weiteren Arbeits- bzw. Rechenschritte vorgesehen werden.

Das betreffende Programm oder die Steuerungsinformation wird an das Hausgerät an dem Standort übersandt. Die Steuerungsinformation wird über das Netzwerk an das Hausgerät übermittelt. Die Steuerungsinformationen werden von einem Dienstanbieter in Form eines Datenträgers, wie z.B. ein Magnetspeichermedium, eine Chipkarte, eine CD-ROM etc., zum Standort des Hausgerätes versandt. Die Steuerungsinformation wird in das Netzwerk eingegeben werden, insbesondere eingelesen. Als Steuerungsinformation wird dabei insbesondere eine Aktualisierung einer Steuerungssoftware des Hausgerätes durch den Dienstanbieter über das Netz übersandt.

Zum Einlesen der übersandten Steuerungsinformationen in das lokale Netz ist eine Infrarot-Schnittstelle, ein Chipkartenleser, ein CD-ROM-Laufwerk oder ein ähnliches Laufwerk zum Lesen magnetischer und/oder optischer Datenträger vorgesehen. Dazu werden die Steuerungsinformationen also in körperlicher Form auf die Bestellung des Benutzers bzw. des Kunden hin an den Standort des Hausgerätes übersandt. Diese Datenträger weisen bekanntermaßen eine ausreichende Haltbarkeit auf. Als Alternative oder als zusätzliche Funktion wird dem Hausgerät ein Zugang oder eine Verbindung mit einem verteilten Netz oder globalem Netz über das lokale Netzwerk, beispielsweise ein HES oder ein ähnliches System, geschaffen. Dieses Merkmal eröffnet die Möglichkeit einer rein elektronischen Übersendung der Steuerungsinformationen ohne körperliche Fertigung z.B. auf einer CD oder einem ähnlichen Medium. Der Kunde kann so als Steuerungsinformation ein Update von CD oder direkt aus dem Internet heraus selber durchführen. Ein Installationsvorgang läuft vorzugsweise automatisch ab, also auch ohne Eingriff des Kunden bzw. des Betreibers des Hausgerätes. Mit der Übersendung der Meldung kann bei dem Dienstanbieter eine Überprüfung dahingehend erfolgen, ob eine weitergehende Aktualisierung der Steuerungssoftware durchgeführt werden sollte. Fehler innerhalb einer vorhandenen Steuerung werden auf diese Weise einfach behoben, wie auch Verbesserungen einer bestehenden Steuerungssoftware nach einem derartigen Verfahren schnell umgesetzt werden können. Die Anwesenheit oder Assistenz eines Kundendiensttechnikers ist nach diesem und/oder vorstehenden Merkmalen nicht mehr erforderlich. Es werden auch keine zusätzlichen Geräte bzw. Hardware an dem Hausgerät und / oder innerhalb des lokalen Netzes benötigt. Ferner treten neben den Kosten einer elektronischen Erstellung der Information im Vergleich zu sonst möglichen Verfahren keine weiteren nennenswerten Kosten hinzu. Versand-, Druck- und/oder Servicekosten sowie ein Besuch eines Mitarbeiters eines Kundendienstes zum Einspielen neuer Software in das Hausgerät bei einem Kunden vor Ort entfallen damit gemäß dieser Ausführungsform der vorliegenden Erfindung.

Vorzugsweise wird die in das lokale Netz übersandte Steuerungsinformation zudem innerhalb des lokalen Netzes gespeichert. Hierzu ist ein Speicherungsmittel vorgesehen, das vorteilhafterweise in dem Server-Rechner enthalten sein kann. So liegt die angeforderte und/oder aktualisierte Steuerungsinformation innerhalb des lokalen Netzes stets schnell abrufbar in elektronischer Form vor. Das Speicherungsmittel kann aber auch in der Steuerung des Hausgerätes selber eingerichtet sein, wobei in jedem Fall der über das Internet oder über eine CD o.ä. in das lokale Netz eingelesene und über die Datenleitungen übertragene aktualisierte Programminhalt dauerhaft sicher aufgenommen wird. Bei der Abarbeitung eines Programms greift die Steuerung dann nicht auf ihr internes, sondern stets auf dieses aktuellere Programm zurück. In dem lokalen Netz kann somit ein Mittel zur Speicherung und/oder zum wiederholtem Aufruf der übersandten Steuerungsinformation an beliebiger Stelle vorgesehen sein.

In einer wesentlichen Weiterbildung der Erfindung wird mindestens ein Teil der Steuerungsaufgaben des Hausgerätes außerhalb des Hausgerätes ausgeführt. In dem Netzwerk, an das das Hausgerät angeschlossen ist, steht mindestens ein Rechner als Zentralrechner oder Server-Rechner zur Verfügung, der wesentlich mehr Rechenleistung vorhält, als ein Hausgerät aufweist. Vorzugsweise wird die Elektroniksteuerung des Hausgerätes als Schalter mit Intelligenz ausgeführt. Die Funktion der Elektroniksteuerung wird immer dann weitgehend ausgeschaltet, wenn von ihr Funktionen bzw. Programme etc. ausgeführt werden sollen, für die die vorhandene Steuerung nicht mehr ausreichend ist. Dabei akzeptiert die interne, Geräte-eigene Steuerungsintelligenz das Eingreifen oder Übernehmen der Steuerung des Hausgerätes durch einen Rechner über das lokale Netz. So wird mindestens ein Teil der Hausgerätesteuerungsaufgaben außerhalb des Hausgeräts in einem an dem Netzwerk angeschlossenen Server-Rechner unter Verwendung der neuen Steuerungsdaten des Dienstanbieters ausgeführt. In der Steuerung des Hausgerätes sind so beispielsweise nur noch Grundfunktionen ausgeführt, wie z.B. das Schalten von Aktoren und die Abfrage von Sensoren, Sicherheitsfunktionen, Echtzeitfunktionen und die Netzwerkkommunikation mit dem Senden und Empfangen von Meldungen. Diese Verlagerung innerhalb des lokalen Netzwerks folgt damit weiter dem Gedanken einer gemeinsamen Nutzung in der Vernetzung vorhandener Ressourcen des gesamten Systems. Die Einsatz- bzw. Lebensdauer eines derart ausgerüsteten Hausgerätes wird durch die flexible Anpaßbarkeit seines Funktionsumfangs insgesamt wesentlich verlängert. Als limitierende Faktoren treten dann nur noch die elektromechanischen Kenndaten des Hausgerätes auf, wie z.B. Motorleistung oder Wirkungsgrad.

Vorteilhafterweise wird eine individuelle Gerätenummer des jeweiligen Hausgerätes als Adresse mindestens innerhalb des lokalen Netzes genutzt. Die Gerätenummer des Hausgerätes ist eine individuelle alphanumerische Zeichenfolge, die als eindeutiges Kennzeichen in dem Hausgerät intern abgelegt ist. Es kann aber auch ein Bestandteil der Gerätenummer sehr vorteilhaft genutzt werden. Da jedes Hausgerät und auch sonstiges Gerät eine individuelle Gerätenummer aufweist, ist diese Art der Vergabe einer individuellen Adresse eine Einstellung am Standort des Hausgerätes nicht mehr notwendig. Alle Arbeiten sind beim Hersteller bereits durchgeführt worden, wobei die individuelle Gerätenummer vorzugsweise in einem nicht-flüchtigen Speicher in dem jeweiligen Hausgerät intern abgelegt wird. Diese Gerätenummer kann dabei neben dem Gerätetyp noch spezielle Informationen enthalten, wie beispielsweise Informationen über besondere Baugruppen, eine Standard-Software, Daten zum Fertigungsdatum und der Herstellungsstätte etc, die bei der Umsetzung der Meldung des betreffenden Kunden hilfreich sein können.

Vorteilhafterweise wird den über das Netz übersandten Steuerungsinformationen eine zugehörige Bedienungsanleitung oder eine Hilfe-Funktion beigefügt. Diese Hilfe wird dem Benutzer auf Anforderung, insbesondere an dem betreffenden Hausgerät selber, zur Verfügung gestellt. Mindestens ein Teil der über das Netz übersandten Information wird in einer Ausführungsform der Erfindung dementsprechend unter Verwirklichung eines oder mehrerer der vorstehend beschriebenen Merkmale in dem lokalen Netz innerhalb des Haushalts an dem Standort auf einem geeigneteren Gerät aufbereitet und/oder angezeigt, vorzugsweise einem Computer oder einem Fernseher.

Ferner verfügen Hausgeräte heute zunehmend über Anzeigeeinrichtungen, wie beispielsweise Klartextdisplays, die in einer Weiterbildung der Erfindung zur Darstellung beispielsweise einer graphischen Benutzeroberfläche genutzt werden. Auch die Informationen zur Ausbildung einer insbesondere intuitiven Benutzerführung werden durch die Steuerungsinformationen an das Hausgerät übermittelt. Mit dem rasanten Fortschritt bei der Herstellung von noch flexibleren Displays oder sonstiger Anzeigemedien, insbesondere auf der Basis leuchtender und/oder farbiger Polymere, sinkt der Herstellungspreis für Displays bei zunehmender Auflösung bzw. einer höheren Dichte von Bildpunkten weiter. So lassen sich auch graphisch ausgestaltete Informationen problemlos anzeigen, vorzugsweise mit Bildern oder Symbolen.

In einer Weiterbildung der Erfindung ist eine Anzeigevorrichtung des Hausgerätes zur Darstellung beispielsweise einer graphischen Benutzeroberfläche und/oder zur Beschriftung von Bedienelementen des Hausgerätes ausgebildet. Sofern keine durch Berührung gesteuerten Anzeigen zum Einsatz kommen, werden bekannte Bedienelemente, wie z. B. Drehschalter oder Knöpfe, in einem Bereich einer Anzeige so angeordnet, dass sie durch die Anzeige hinsichtlich ihrer Funktion beschriftet werden. In einer bevorzugten Ausführungsform sind weitgehend unbeschriftete Schalter in einem Anzeigedisplay integriert oder von diesem umrahmt. Somit wird zu der aktualisierten Steuerung automatisch auch eine zugehörige Bedienungs- und Anzeigetechnik flexibel über das Netz hin auf ein Hausgerät übertragen. In Ergänzung kann auch eine zugehörige Bedienungsanleitung den über das Netz vom Dienstanbieter aus übersandten Informationen beigefügt werden, ebenfalls papierlos. Eine Anzeige, Ansage oder wahlweise auch ein Ausdruck der Bedienungsanleitung erfolgt nur noch beim Kunden vor Ort. Damit beschränken sich die Investitionen eines Dienstanbieters bei einem erfindungsgemäßen Verfahren vorteilhafterweise auf den Aufbau oder die teilweise Anmietung eines entsprechenden Netzes sowie die Aufbereitung der an die Hausgeräte zu versendenden Informationen. Zur Darstellung der Information nutzt der Dienstanbieter ohne weitere eigene Kosten nur die bereits serienmäßig an Hausgeräten verfügbaren Anzeigeeinrichtungen.

Vorzugsweise ist eine Kurzhilfe vorgesehen, durch die auf Anfrage durch den Anwender unter Betätigung einer jeweiligen Taste oder sonstigen Bedienelementen des Hausgerätes sehr vorteilhaft zur Schnell-Unterrichtung über die Funktion einer Taste etc. aufgerufen werden kann. Diese Kurzhilfe ist vorzugsweise in dem vorstehend beschriebenen Speichermittel des lokalen Netzes abgelegt.

Eine Eingabe personenbezogener Daten wird vorzugsweise in dem lokalen Netzwerk vorgenommen. Diese Daten sind in gewissem Umfang z.B. zur Adressierung angeforderter Steuerungsinformationen für den Dienstanbieter erforderlich, insbesondere zu einer Bestimmung eines Standortes des Hausgerätes. Aber auch im Fall einer kostenpflichtigen Dienstleistung werden diese Daten benötigt. Dabei werden die genannten Daten einer Meldung eines Hausgerätes automatisch hinzugefügt. Ein Beifügen personenbezogener Daten wird in einer Ausführungsform der Erfindung jedoch nur nach einer Freigabe durch einen Anwender bzw. Kunden automatisch vorgenommen, wobei die Freigabe insbesondere zweckgebunden und/oder nach Definition eines Anwenders bzw. Kunden ausgeführt ist.

Das lokale Netzwerk ist vorzugsweise in einer Sternstruktur ausgebildet, beispielsweise als ein "HES" als kabel- bzw. leitungsgebundenes System. Damit können im Rahmen der vorliegenden Erfindung auch die vorteilhaften Eigenschaften lokaler Netze mit einer Verschaltung unterschiedlicher Geräte in einem Haushalt genutzt werden, beispielsweise zur Anzeige und/oder Ausgabe einer aktuellen Bedienungsanleitung. Eine Veränderung durch Anschließen eines neuen Gerätes entspricht zudem nur dem Zufügen eines Strahls und vorteilhafterweise nicht einer zeitweiligen Unterbrechung, wie dies bei einer Ringstruktur zwingend der Fall ist. An dem lokalen Netzwerk ist in einer Weiterbildung der Erfindung ein Zugang zu einem globalen Netzwerk und insbesondere ein Internet-Zugang vorgesehen. Der Zugang zu dem globalen Netzwerk erfolgt vorzugsweise über eine Telefonleitung.

Das Hausgerät und/oder das lokale Netz kann ferner auch über eine Stromversorgungsleitung mit dem Dienstanbieter verbunden sein, wobei auch diese Verbindung wiederum vorzugsweise als Internet-Verbindung ausgeführt ist. Bauliche Erweiterungen in älteren Haushalten können somit entfallen, und erfindungsgemäße Hausgeräte sind universell einsetzbar.

Das Hausgerät kann weiter vorzugsweise auch über eine drahtlose Datenverbindung an das lokale Netz angebunden sein, beispielsweise über Funk oder Infrarot-Datenverkehr. Das lokale Netzwerk seinerseits kann aber auch über eine drahtlose Datenverbindung an ein globales Netz angebunden sein, insbesondere über eine Mobilfunkstrecke. Gerade bei einem drahtlosen Datenaustausch kann das Hausgerät in einer Ausführungsform der Erfindung jedoch auch durch eine Funkverbindung in Form einer Weitverbindung mit einem Dienstvermittler als Anbieter und/oder Betreiber eines verteilten globalen Netzes stehen. Durch diese schnelle Direktverbindung kann ein alternativ vorhandener Anschluß des lokalen Datennetzes gezielt genutzt werden, um beispielsweise eine Meldung mit ihrem relativ knappen Dateninhalt schneller an einen Dienstanbieter zu übermitteln.

Vorteilhafterweise werden durch ein erfindungsgemäßes Verfahren und eine dementsprechende Vorrichtung neue Möglichkeiten zur präzisierbaren Anforderung und Übermittlung von Steuerungsinformationen geschaffen. Der Umfang der Steuerungsinformation ist nach den vorstehend beschriebenen Maßgaben einstellbar, wobei für Hausgeräte auch Eigenschaften über das Netz durch einen Dienstanbieter zur Verfügung stehen. Damit offenbart ein erfindungsgemäßes Verfahren auch ein neues Geschäftsfeld für den Hersteller von erfindungsgemäßen Hausgeräten. Er tritt als jederzeit verfügbarer Dienstvermittler bzw. Netzanbieter und Anbieter unterschiedlicher Dienste auf, die ihrerseits je nach Ausführungsform auch zentral beim Dienstanbieter erfaßt werden und für einen Kunden kostenpflichtig sein können. Dieser Dienst kann wie auch die vorstehend beschriebenen Dienste durch den Gerätehersteller als Dienstanbieter geleistet werden. Eine Anforderung derartiger Dienste kann entgeltpflichtig ausgebildet sein. Seine Nutzung steht vorzugsweise in der freien Wahl des Hausgerätebetreibers als Kunden. Dabei werden die erforderlichen Informationen in Form elektronischer Daten verarbeitet, so dass eine Lager- und Bestandsverwaltung für die Information auf die Größe moderner flexibler elektronischer Massenspeichermedien und entsprechend leistungsfähiger Rechenanlagen zusammenschrumpft.

Nachfolgend wird ein Ausführungsbeispiel der Erfindung anhand der Zeichnung näher erläutert. In der Zeichnung zeigt:
- Figur 1:: eine skizzierte Darstellung einer Verbindung eines erfindungsgemäßen Systems vernetzter Hausgeräte an einem Standort mit einem externen Dienstanbieter und
- Figur 2:: ein Logikdiagramm zur prinzipiellen Darstellung eines erfindungsgemäßen Informationssystems.

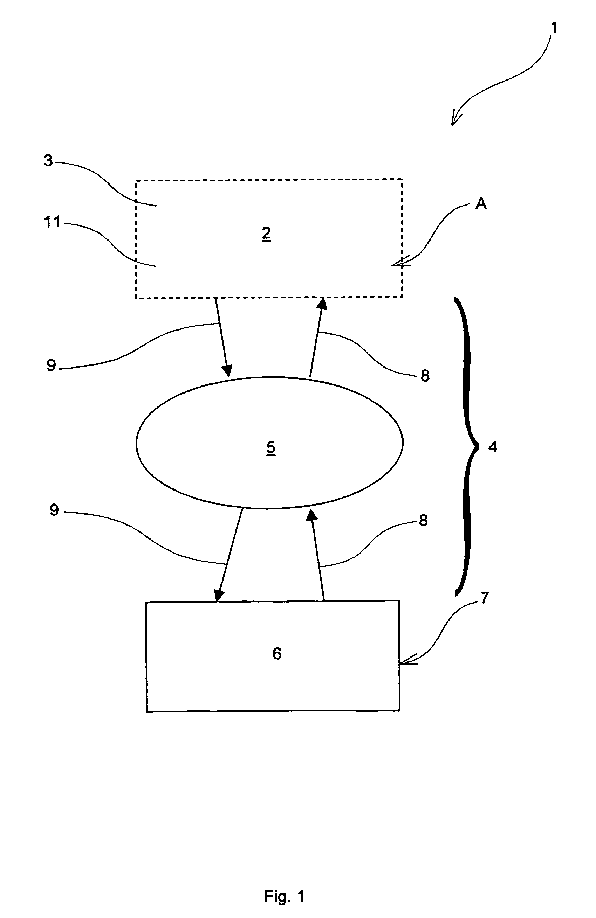

Ein erfindungsgemäßes Steuerungssystem 1 (Fig. 1) umfaßt ein lokales Netzwerk 2 mit einem Hausgerät 3 an einem Standort A eines Dienstnehmers, also dem Betreiber des Hausgeräts 3 als Kunden des Systems 1. Über ein globales Netz 4 eines Dienstvermittlers 5 ist das lokale Netzwerk 2 mit einer externen Rechnereinheit 6 eines Dienstanbieters 7 verbunden, die zur Aufbereitung und zur Versendung von Steuerungsinformationen 8 ausgebildet ist.

Zur Herstellung eines Kontakts auf Anforderung des Kunden an dem Standort A des Hausgeräts 3 mit dem Dienstanbieter 7 wird eine Meldung 9 von dem Hausgerät 3 aus an den Dienstanbieter 7 abgesandt. Diese Meldung 9 beinhaltet als wesentlichen Bestandteil einen Anforderungskatalog für eine Steuerungsinformation 8, die auf der Basis der Meldung 9 bei dem Dienstanbieter 7 speziell erstellt wird. Ferner enthält die Meldung 9 eine individuelle Gerätenummer, durch die das betreffende Hausgerät 3 sich auch innerhalb einer Gruppe gleichartiger Geräte eindeutig unterscheidet. Diese individuelle Gerätenummer ist die Adresse des Hausgerätes 3 innerhalb des lokalen Netzes 2, durch die der Dienstanbieter 7 das sendende Hausgerät 3 vollständig identifizieren kann. Aus einem Speichermittel 11 heraus wird die Meldung 9 noch innerhalb des lokalen Netzes 2 um personen- bzw. wohnortgebundene Informationen erweitert, die eine Abrechnung und/oder Übersendung der angeforderten Steuerungsinformationen 8 in körperlicher Form als Datenträger an den Betreiber des Hausgeräts 3 am Standort A ermöglichen. Eine wohnortgebundene Information besteht im einfachsten Fall, nämlich dem einer kostenlosen Serviceleistung, nur aus der vollständigen Anschrift und der für ein schriftliches Anschreiben gewünschten Anrede.

Bei der angeforderten Steuerungsinformation 8 handelt es sich um ein aktuelles Maschinenprogramm, das anhand der von dem Kunden vorbereiteten und vom Standort A aus übersandten Meldung 9 auf einen Anwendungsfall hin optimiert worden ist. Dieses Steuerungsprogramm wird in der externen Rechnereinheit 6 des Dienstanbieters 7 generiert und dann zur Ausführung über das globale Netz 4 an das lokale Netz 2 übersandt. Dort findet eine Aufbereitung der Steuerungsinformation 8 und eine Weiterleitung an das Hausgerät 3 statt. Nach dem Ablauf des Programms liegt die durch die vorher übermittelten Systemdaten charakterisierte spezielle Situation nicht mehr vor. Sie ist aber in einer Form abstrahiert worden, daß sie erneut auftreten kann. So wird das abgearbeitete Maschinenprogramm gespeichert, aber nicht in dem betreffenden Hausgerät 3, sondern in einem Speichermittel 11 abgelegt. Im Bedarfsfall wird das in elektronischer Form abgelegte Maschinenprogramm von dem Hausgerät 3 aus dem lokalen Netz 2 dann erneut angefordert.

Durch diese stete Erneuerung der Funktionalität des Hausgerätes wird auch eine Erweiterung des Funktionsumfangs realisiert, da eine dauernde Anpassung der Fähigkeiten des Hausgerätes 3 an eine aktuelle Anforderung vorgenommen wird. Auch ältere Geräte sind somit von dem wissenschaftlich-technischen Fortschritt hinsichtlich ihrer Steuerung nicht ausgeschlossen, da der Leistungs- bzw. Funktionsumfang durch die Steuerung jeweils angepaßt wird. Hierdurch wird die Standzeit bzw. Nutzungsdauer des Hausgerätes wesentlich verlängert. Das Hausgerät 3 erhält auch eine weniger komplexe Elektroniksteuerung, da es seine Steuerungsintelligenz über das lokale Netz 2 bezieht. Ein interner Speicher für Waschprogramme, Kundendienstprogramme und Geräteprüfprogramme ist damit auch nicht nötig, so dass das Hausgerät 3 in der Fertigungsprüfung noch beim Hersteller direkt angesteuert werden kann. Damit ist das beschriebene Hausgerät insgesamt auch zuverlässiger gegen Ausfälle. Der Dienstanbieter finanziert seinen Aufwand dadurch, dass diese Dienstleistung für den Kunden am Standort A kostenpflichtig ist. Zudem bindet er jeden Kunden langfristig an sich, also auch für eventuelle Neuanschaffungen.

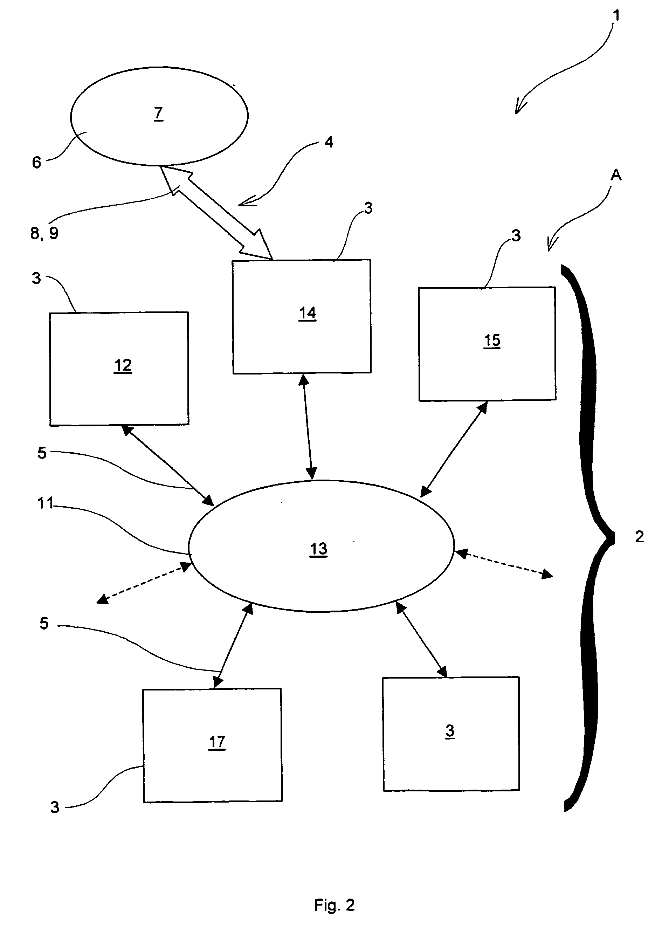

Figur 2 zeigt ein Logikdiagramm zur prinzipiellen Darstellung eines erfindungsgemäßen Informationssystems 1 mit einem lokalen Netz 2 und diversen daran angeschlossenen vernetzten Hausgeräten 3 in einem exemplarisch dargestellten Haushalt an dem Standort A. Dabei sind alle schematisch dargestellten Hausgeräte 3 zur Versendung einer Meldung 8 über das lokale Netzwerk 2 und daran anschließend über das globale Netzwerk 4 an den Dienstanbieter 7 ausgebildet. Als Hausgeräte 3 eines durchschnittlichen Haushalts sind exemplarisch dargestellt: eine Waschmaschine 12, ein Computer 13, ein Telefon 14 und eine Kaffeemaschine 15.

Als Übertragungsweg im Standort A, also als Übertragungswege innerhalb des lokalen Netzes 2 innerhalb des Haushalts, sind die Leitungen 16 einer Stromversorgung vorgesehen, an die jedes der Hausgeräte 3 zur Versorgung mit elektrischer Energie zwingend angeschlossen sein muß. Dabei ist jedes Hausgerät 3 mit einer individuellen Kennung versehen, nämlich seiner individuellen Herstellungsnummer als Adresse in dem lokalen Netz 2. So werden in diesem Haushalt an jedem Hausgerät 3 aus dem lokalen Netz 2 die jeweils angeforderten Steuerungsinformationen 8 empfangen. Eine Meldung 9 eines der genannten Hausgeräte 3 wird in der dargestellten Sternstruktur des lokalen Netzes 2 an den zentral positionierten Computer 13 direkt weitergeleitet und vor dort aus versandt. Hierzu dient ein Internetzugang, der aber nur am Computer 13 vorgesehen ist, durch den das lokales Netz 2 aber für alle angeschlossenen Hausgeräte 3 verfügbar ist. Eine Eingabe personenbezogener Daten wird in der Ausführungsform von Fig. 2 in dem lokalen Netzwerk 2 vorgenommen, vorzugsweise in der bequemen Form über den Computer 13. Diese sensitiven Daten werden einer Meldung 9 eines Hausgerätes 2 automatisch hinzugefügt, um einem Dienstanbieter 7 die Bestimmung des Standortes A des Hausgerätes 3 zu ermöglichen. Dieses Beifügen personenbezogener Daten erfolgt aus Gründen des Datenschutzes nur nach einer insbesondere zweckgebundenen Freigabe durch einen Anwender bzw. Kunden.

Die Meldung 9 veranlaßt den Dienstanbieter 7 automatisch zur Auswahl, Aufbereitung und der Absendung einer dementsprechenden Steuerungsinformation 8 als Rückmeldung an den Kunden am Standort A. Derartige Steuerungsinformationen 8 können sehr kurz sein und so beispielsweise auf einer Chipkarte abgespeichert und in körperlicher Form zusammen mit einer Rechnung an den Kunden übersandt werden. Ein Kartenleser ist im Zeitalter des online-Bankings oder der Nutzer-Identifikation als Diebstahls- und Einbruchssicherung bereits an vielen Computern auch im Heimbereich vorhanden. Dieses Lesegerät wird nun auch zum Einlesen der Steuerungsinformationen 8 genutzt, die nach einer Aufbereitung durch den Computer 13 über das lokale Netz 2 an das betreffende Hausgerät 3 übersandt werden. Zusätzliche Hardware bzw. Lesegeräte an den Hausgeräten 3 selber sind damit nicht erforderlich. Die betreffende Adresse kann als individuelle Gerätenummer der Meldung 9 entnommen werden und auch auf dem Datenträger enthalten sein. Das Einspielen der Daten geht damit, vom Auspacken des Datenträgers und dem Einschieben in ein Lesegerät mal abgesehen, automatisch vor sich.

Das dargestellte System 1 besitzt durch das lokale Netz 2 die Möglichkeit, eine Anzeige und/oder Wiedergabe an einem beliebig durch den Kunden wählbaren Hausgerät 3 bzw. sonstigen elektrischen Gerät an dem Standort A erfolgen zu lassen. Ein Telefon 14 wird dann zur optischen oder akustischen Wiedergabe von Zusatzinformationen oder einer tastenbezogenen Kurzhilfe herangezogen, wenn eine Anzeige an dem eigentlich betreffenden Hausgerät 3 nicht möglich ist. Die optische Anzeige erfolgt in Kurzform als SMS auf einem Display des Telefons 14. Unter Nutzung des lokalen Netzes 2 erfolgt die Anzeige und Wiedergabe der Zusatzinformation besonders vorteilhaft in einem Fernseher 17. In dem modernen Computer 13 werden diese Zusatzinformationen in einem sich zentral auf einem Bildschirm öffnenden Fenster mit Bild- und Tonwiedergabe angezeigt.

Die aktuelle Steuerungsinformation 8 mit allen vorstehend beschriebenen Erweiterungen wird bei einer Übersendung via eMail nicht mehr in körperlicher Form als Druckwerk, CD oder ähnliches ausgeliefert. Es wird so durch ein erfindungsgemäßes Verfahren einen wertvollen Beitrag zur Senkung der Kosten beim Hersteller und/oder einem Dienstanbieter geleistet. An die aktuelle Steuerungsinformation 8 angepaßte Gebrauchsanweisungen etc. werden dann an dem Computer 13 angesehen und nur bei Bedarf auch ausgedruckt.

Ferner werden für einen Hersteller von Hausgeräten 3 mit der Bereitstellung von analysierten Daten und gesammelten Kundenwünschen aus Meldungen 9 sowie dem Betreiben eines entsprechenden Netzes 3 neue Geschäftsfelder eröffnet. Durch eine fortschreitende Produktinnovation und Aufrechterhaltung des Kontakts zu schon gewonnenen Kunden wird in vorteilhafter Weise auch die Markentreue der Kunden gestärkt.

### Bezugszeichenliste

- 1: Steuerungssystem
- 2: lokales Netz
- 3: Hausgerät
- 4: globales Netz
- 5: Dienstvermittler
- 6: externe Rechnereinheit
- 7: Dienstanbieter
- 8: Steuerungsinformation
- 9: Meldung
- 10:
- 11: Speichermittel
- 12: Waschmaschine
- 13: Computer
- 14: Telefon
- 15: Kaffeemaschine
- 16: Stromversorgungsleitung
- 17: Fernseher

- A: Standort des Hausgerätes 3

## Patentansprüche

1. Verfahren zur Steuerung eines Hausgerätes (3) an einem Standort (A), das über eine interne Steuereinheit gesteuert wird, das mit einem lokalen Netzwerk (2) in Verbindung steht und das über das lokale Netzwerk (2) mit einem Dienstanbieter (7) verbindbar ist und das ferner nach Anforderung durch einen Benutzer eine Steuerungsinformation (8) aus dem lokalen Netzwerk (2) empfängt, wobei die Steuerungsinformation (8) maschinennahe Steuerbefehle und/oder Teilprogramme und/oder ein Programm umfasst, und wobei die Steuerungsinformation (8) an dem Standort (A) des Hausgerätes (3) zur Steuerung des Hausgerätes (3) ausgewertet und/oder umgesetzt wird, **dadurch gekennzeichnet, dass** zur Anforderung der Steuerungsinformation (8) eine Meldung (9) von dem Hausgerät (3) aus in das lokale Netzwerk (2) ausgesandt und durch das lokale Netzwerk (2) an den Dienstanbieter (7) abgesandt wird, dass die Meldung (9) einen Anforderungskatalog für die Steuerungsinformation (8) beinhaltet und dass die Steuerungsinformation (8) auf Basis der Meldung (9) bei dem Dienstanbieter (7) speziell erstellt wird.

2. Verfahren nach Anspruch 1, **dadurch gekennzeichnet, dass** die Meldung (9) aus dem lokalen Netzwerk (2) an den Dienstanbieter (7) per Telefon (14), Fax, eMail oder einen sonstigen Kommunikationskanal zur Sprach- oder Datenübermittlung übersandt wird.

3. Verfahren nach Anspruch 1 oder 2, **dadurch gekennzeichnet, dass** die Steuerungsinformation (8) als Programm unter Berücksichtigung der Anforderungen des Benutzers bei dem Dienstanbieter (7) entwickelt wird.

4. Verfahren nach Anspruch 3, **dadurch gekennzeichnet, dass** die Steuerungsinformation (8) unter Abbildung auf einer dementsprechenden virtuellen Maschine entwickelt wird.

5. Verfahren nach einem der vorhergehenden Ansprüche, **dadurch gekennzeichnet, dass** die Steuerungsinformation (8) von dem Dienstanbieter (7) in der Form von Daten an das lokale Netzwerk (2) oder über das lokale Netzwerk (2) an das Hausgerät (3) übermittelt wird.

6. Verfahren nach einem der Ansprüche 1 bis 4, **dadurch gekennzeichnet, dass** ein Datenträger mit der gespeicherten Steuerungsinformation (8) von dem Dienstanbieter (7) zum Standort (A) des Hausgerätes (3) versandt wird, und dass dort die Steuerungsinformation (8) in das lokale Netzwerk (2) eingegeben oder eingelesen wird.

7. Verfahren nach Anspruch 6, **dadurch gekennzeichnet, dass** die Steuerungsinformationen (8) in das lokale Netzwerk (2) über eine Infrarot-Schnittstelle oder ein Laufwerk zum Lesen magnetischer und/oder optischer Datenträger eingelesen wird.

8. Verfahren nach einem der vorhergehenden Ansprüche, **dadurch gekennzeichnet, dass** die Steuerungsinformation (8) eine Aktualisierung einer Steuerungssoftware des Hausgerätes (3) ist.

9. Verfahren nach Anspruch 8, **dadurch gekennzeichnet, dass** in der Steuerungssoftware Schnittstellen zu einzelnen Grundfunktionen vorhanden sind, und dass die Grundfunktionen als Teilprogramme ausgebildet sind.

10. Verfahren nach einem der vorhergehenden Ansprüche, **dadurch gekennzeichnet, dass** mindestens ein Teil der Steuerungsaufgaben des Hausgerätes (3) außerhalb des Hausgeräts (3) in einem an dem Netzwerk (2) angeschlossenen Zentralrechner (5) ausgeführt wird.

11. Verfahren nach einem der vorhergehenden Ansprüche, **dadurch gekennzeichnet, dass** eine individuelle Gerätenummer des jeweiligen Hausgerätes (3) als Adresse mindestens innerhalb des lokalen Netzwerkes (2) genutzt wird.

12. Verfahren nach dem vorhergehenden Anspruch, **dadurch gekennzeichnet, dass** der über das lokale Netzwerk (2) übersandten Steuerungsinformation (8) eine zugehörige Bedienungsanleitung oder eine Hilfe-Funktion beigefügt wird, die dem Benutzer zur Verfügung gestellt wird.

13. Verfahren nach Anspruch 12, **dadurch gekennzeichnet, dass** die Bedienungsanleitung oder die Hilfe-Funktion dem Benutzer an dem Hausgerät (3) zur Verfügung gestellt wird.

14. Verfahren nach einem der vorhergehenden Ansprüche, **dadurch gekennzeichnet, dass** die Steuerungsinformation (8) innerhalb des lokalen Netzwerkes (2) gespeichert wird.

15. Verfahren nach einem der vorhergehenden Ansprüche, **dadurch gekennzeichnet, dass** dem Hausgerät (3) ein Zugang oder eine Verbindung mit einem verteilten Netzwerk oder globalem Netzwerk (4) über das lokale Netzwerk (2) geschaffen wird.

16. Verfahren nach einem der vorhergehenden Ansprüche, **dadurch gekennzeichnet, dass** eine Eingabe personenbezogener Daten in dem lokalen Netzwerk (2) vorgenommen wird, wobei diese Daten der Meldung (9) des Hausgerätes (3) automatisch hinzugefügt werden.

17. Verfahren nach Anspruch 16, **dadurch gekennzeichnet, dass** die personenbezogener Daten zur Bestimmung des Standortes (A) des Hausgerätes (3) dienen.

18. Verfahren nach Anspruch 16 oder 17, **dadurch gekennzeichnet, dass** das Hinzufügen der personenbezogener Daten nur nach einer Freigabe durch den Benutzer erfolgt.

19. Verfahren nach einem der vorhergehenden Ansprüche, **dadurch gekennzeichnet, dass** mindestens ein Teil der über das Netzwerk (2) übersandten Information in dem lokalen Netzwerk (2) innerhalb eines Haushalts an dem Standort (A) auf einem elektrischen Gerät aufbereitet und/oder angezeigt wird.

20. Verfahren nach Anspruch 19, **dadurch gekennzeichnet, dass** das elektrische Gerät ein Computer (13) oder ein Fernseher (17) ist.

21. Vorrichtung zur Steuerung eines Hausgerätes an einem Standort (A), die mindestens teilweise als programmierte elektronische Steuerung ausgebildet ist, wobei das Hausgerät (3) an ein lokales Netzwerk (2) angeschlossen, über das lokale Netzwerk (2) mit einem Dienstanbieter (7) verbindbar und zum Empfang von Steuerungsinformation (8) aus dem lokalen Netzwerk (2) ausgebildet ist, wobei die Steuerungsinformation (8) maschinennahe Steuerbefehle und/oder Teilprogramme und/oder ein Programm umfasst, und wobei an dem Standort (A) des Hausgerätes (3) Mittel zur Auswertung und/oder Umsetzung der Steuerungsinformation (8) zur Steuerung des Hausgerätes (3) vorhanden sind, **dadurch gekennzeichnet, dass** das Hausgerät (3) zum Versand einer Meldung (9) an das lokale Netzwerk (2) zur Anforderung der Steuerungsinformationen (8) und das lokale Netzwerk (2) zum Versand der Meldung (9) an den Dienstanbieter (7) ausgebildet ist, und dass die Meldung (9) einen Anforderungskatalog für die Steuerungsinformation (8) beinhaltet zur speziellen Erstellung der Steuerungsinformation (8) auf Basis der Meldung (9) bei dem Dienstanbieter (7).

22. Vorrichtung nach Anspruch 21, **dadurch gekennzeichnet, dass** eine individuelle Gerätenummer des jeweiligen Hausgerätes (3) eine Adresse mindestens innerhalb des lokalen Netzwerkes (2) ist.

23. Vorrichtung nach einem der Ansprüche 21 oder 22, **dadurch gekennzeichnet, dass** in dem lokalen Netzwerk (2) ein Mittel zur Speicherung und/oder zum wiederholten Aufruf der übersandten Steuerungsinformation (8) vorhanden ist.

24. Vorrichtung nach einem der Ansprüche 21 bis 23, **dadurch gekennzeichnet, dass** die Steuerung des Hausgerätes (3) zur mindestens teilweisen Übergabe der Gerätesteuerung an eine externe Rechnereinheit (6) ausgebildet ist, die sich in Kontakt mit dem lokalen Netzwerk (2) befindet.

25. Vorrichtung nach Anspruch 24, **dadurch gekennzeichnet, dass** eine Anzeigevorrichtung des Hausgerätes (3) zur Darstellung einer graphischen Benutzeroberfläche und/oder zur Beschriftung von Bedienelementen des Hausgerätes (3) ausgebildet ist.

26. Vorrichtung nach einem der Ansprüche 21 bis 25, **dadurch gekennzeichnet, dass** das lokale Netzwerk (2) in einer Sternstruktur ausgebildet ist.

27. Vorrichtung nach einem der Ansprüche 21 bis 26, **dadurch gekennzeichnet, dass** das Hausgerät (3) über eine drahtlose Datenverbindung an das lokale Netzwerk (2) angebunden ist.

28. Vorrichtung nach einem der Ansprüche 21 bis 27, **dadurch gekennzeichnet, dass** an dem lokalen Netzwerk (2) ein Zugang zu einem globalen Netzwerk (4) vorgesehen ist.

29. Vorrichtung nach Anspruch 28, **dadurch gekennzeichnet, dass** das lokale Netzwerk (2) über eine drahtlose Datenverbindung oder über eine Telefonleitung an das globale Netzwerk (4) angebunden ist.

30. Vorrichtung nach einem der Ansprüche 21 bis 29, **dadurch gekennzeichnet, dass** das Hausgerät (3) und/oder das lokale Netzwerk (2) über eine Stromversorgungsleitung (16) mit dem Dienstanbieter (7) verbunden ist.

## Claims

1. Method of controlling a domestic appliance (3) at a location (A), which is controlled by way of an internal control unit, which is connected with a local network (2) and connectible by way of the local network (2) with a service provider (7) and which in addition receives control information (8) from the local network (2) on demand by a user, wherein the control information (8) comprises machine-related control commands and/or part programs and/or a program and wherein the control information (8) is evaluated and/or transformed at the location (A) of the domestic appliance (3) for control of the domestic appliance (3), **characterised in that** for demanding the control information (8) a message (9) is transmitted from the domestic appliance (3) in the local network (2) and dispatched by the local network (2) to the service provider (7), that the message (9) includes a demand catalogue for the control information (8) and that the control information (8) is specially set up at the service provider (7) on the basis of the message (9).

2. Method according to claim 1, **characterised in that** the message (9) is transmitted from the local network (2) to the service provider (7) by telephone (14), telefax, e-mail or another communications channel for speech or data communication.

3. Method according to claim 1 or 2, **characterised in that** the control information (8) is developed at the service provider (7) as a program with consideration of the requirements of the user.

4. Method according to claim 3, **characterised in that** the control information (8) is developed with representation on a corresponding virtual machine.

5. Method according to one of the preceding claims, **characterised in that** the control information (8) is communicated to the domestic appliance (3) by the service provider (7) in the form of data to the local network (2) or by way of the local network (2).

6. Method according to one of claims 1 to 4, **characterised in that** a data carrier with the stored control information (8) is sent by the service provider (7) to the location (A) of the domestic appliance (3) and that the control information (8) is there input or read into the local network (2).

7. Method according to claim 6, **characterised in that** the control information (8) is read into the local network (2) by way of an infrared interface or a drive for reading magnetic and/or optical data carriers.

8. Method according to one of the preceding claims, **characterised in that** the control information (8) is an updating of a control software of the domestic appliance (3).

9. Method according to claim 8, **characterised in that** interfaces for individual basic functions are present in the control software and that the basic functions are formed as part programs.

10. Method according to one of the preceding claims, **characterised in that** at least a part of the control tasks of the domestic appliance (3) is executed outside the domestic appliance (3) in a central computer (5) connected with the network (2).

11. Method according to one of the preceding claims, **characterised in that** an individual appliance number of the domestic appliance (3) is used as address at least within the local network (2).

12. Method according to the preceding claim, **characterised in that** the control information (8) transmitted by way of the local network (2) is accompanied by an associated user guide or an auxiliary function, which is made available to the user.

13. Method according to claim 12, **characterised in that** the user guide or the auxiliary function is made available to the user at the domestic appliance (3).

14. Method according to one of the preceding claims, **characterised in that** the control information (8) is stored within the local network (2).

15. Method according to one of the preceding claims, **characterised in that** an access or a connection with a distributed network or global network (4) is created at the domestic appliance (3) by way of the local network (2).

16. Method according to one of the preceding claims, **characterised in that** an input of person-related data into the local network (2) is undertaken, wherein these data are automatically added to the message (9) of the domestic appliance (3).

17. Method according to claim 16, **characterised in that** the person-related data serve for determination of the location (A) of the domestic appliance (3).

18. Method according to claim 16 or 17, **characterised in that** the adding of the person-related data is carried out only after a release by the user.

19. Method according to one of the preceding claims, **characterised in that** at least a part of the information, which is transmitted by way of the network (2), in the local network (2) is prepared and/or displayed within a domestic appliance at the location (A) on an electrical apparatus.

20. Method according to claim 19, **characterised in that** the electrical apparatus is a computer (13) or a television set (17).

21. Device for control of a domestic appliance at a location (A), which is constructed at least in part as a programmed electronic control, wherein the domestic appliance (3) is connected with a local network (2), connectible by way of the local network (2) with a service provider (7) and constructed for reception of control information (8) from the local network (2), wherein the control information (8) comprises machine-related control commands and/or part programs and/or a program and wherein means for evaluation and/or transformation of the control information (8) for control of the domestic appliance (3) are present at the location (A) of the domestic appliance (3), **characterised in that** the domestic appliance (3) is constructed for dispatch of a message (9) to the local network (2) for demanding the control information (8) and the local network (2) is constructed for dispatch of the message (9) to the service provider (7) and that the message (9) contains a demand catalogue for the control information (8) for special setting-up of the control information (8) at the service provider (7) on the basis of the message (9).

22. Device according to claim 21, **characterised in that** an individual appliance number of the respective domestic appliance (3) is an address at least within the local network (2).

23. Device according to one of claims 21 and 22, **characterised in that** a means for storage and/or for repeated call-up of the transmitted control information (8) is present in the local network (2).

24. Device according to one of claims 21 to 23, **characterised in that** the control of the domestic appliance (3) is constructed for at least partial transmission of the appliance control to an external computer unit (6) in contact with the local network (2).

25. Device according to claim 24, **characterised in that** a display device of the domestic appliance (3) is constructed for representation of a graphical user surface and/or for designating control elements of the domestic appliance (3).

26. Device according to one of claims 21 to 25, **characterised in that** the local network (2) is of star-structured construction.

27. Device according to one of claims 21 to 26, **characterised in that** the domestic appliance (3) is connected with the local network (2) by way of a wire-free data connection.

28. Device according to one of claims 21 to 27, **characterised in that** an access to a global network (4) is provided at the local network (2).

29. Device according to claim 28, **characterised in that** the local network (2) is connected with the global network (4) by way of a wire-free data connection or by way of a telephone line.

30. Device according to one of claims 21 to 29, **characterised in that** the domestic appliance (3) and/or the local network (2) is or are connected with the service provider (7) by way of a power supply line (16).

## Revendications

1. Procédé de commande d'un appareil électroménager (3) sur un site (A), qui est commandé par le biais d'une unité de commande interne, qui est connecté à un réseau local (2), qui peut être relié à un prestataire de services (7) par le biais du réseau local (2) et qui, en outre, reçoit une information de commande (8) du réseau local (2) après une demande adressée par un utilisateur, l'information de commande (8) comprenant des instructions de commande proches de la machine et/ou des programmes partiels et/ou un programme et l'information de commande (8) étant exploitée et/ou transformée sur le site (A) de l'appareil électroménager (3) en vue de la commande de l'appareil électroménager (3), **caractérisé en ce que**, pour demander l'information de commande (8), un message (9) est envoyé de l'appareil électroménager (3) dans le réseau local (2) et envoyé au prestataire de services (7) par le réseau local (2), **en ce que** le message (9) contient un catalogue de demande pour l'information de commande (8) et **en ce que** l'information de commande (8) est élaborée spécialement chez le prestataire de services (7) sur la base du message (9).

2. Procédé selon la revendication 1, **caractérisé en ce que** le message (9) est envoyé du réseau local (2) au prestataire de services (7) par téléphone (14), par télécopie, par courrier électronique ou tout autre canal de communication permettant une transmission vocale ou de données.

3. Procédé selon la revendication 1 ou 2, **caractérisé en ce que** l'information de commande (8) est développée en tant que programme chez le prestataire de services (7) en tenant compte des demandes de l'utilisateur.

4. Procédé selon la revendication 3, **caractérisé en ce que** l'information de commande (8) est développée en ayant recours à une reproduction sur une machine virtuelle correspondante.

5. Procédé selon l'une des revendications précédentes, **caractérisé en ce que** l'information de commande (8) est transmise sous forme de données par le prestataire de services (7) au réseau local (2) ou à l'appareil électroménager (3) par le biais du réseau local (2).

6. Procédé selon l'une des revendications 1 à 4, **caractérisé en ce qu'**un support de données sur lequel l'information de commande (8) est enregistrée est envoyé au site (A) de l'appareil électroménager (3) par le prestataire de services (7), et **en ce que** l'information de commande (8) est entrée ou importée dans le réseau local (2) sur le site.

7. Procédé selon la revendication 6, **caractérisé en ce que** l'information de commande (8) est importée dans le réseau local (2) par le biais d'une interface infrarouge ou d'un lecteur permettant de lire des supports de données magnétiques et/ou optiques.

8. Procédé selon l'une des revendications précédentes, **caractérisé en ce que** l'information de commande (8) est une mise à jour d'un logiciel de commande de l'appareil électroménager (3).

9. Procédé selon la revendication 8, **caractérisé en ce que** des interfaces relatives à des fonctions de base individuelles sont présentes dans le logiciel de commande et **en ce que** les fonctions de base sont exécutées en tant que programmes partiels.

10. Procédé selon l'une des revendications précédentes, **caractérisé en ce qu'**au moins une partie des tâches de commande de l'appareil électroménager (3) est exécutée à l'extérieur de l'appareil électroménager (3) dans un calculateur central (5) raccordé au réseau (2).

11. Procédé selon l'une des revendications précédentes, **caractérisé en ce qu'**un numéro d'appareil individuel de l'appareil électroménager (3) respectif est utilisé en tant qu'adresse au moins à l'intérieur du réseau local (2).

12. Procédé selon l'une des revendications précédentes, **caractérisé en ce qu'**un mode d'emploi associé ou une fonction d'aide mis(e) à la disposition de l'utilisateur est joint(e) à l'information de commande (8) envoyée par le biais du réseau local (2).

13. Procédé selon la revendication 12, **caractérisé en ce que** le mode d'emploi ou la fonction d'aide est mis(e) à la disposition de l'utilisateur au niveau de l'appareil électroménager (3).

14. Procédé selon l'une des revendications précédentes, **caractérisé en ce que** l'information de commande (8) est enregistrée à l'intérieur du réseau local (2).

15. Procédé selon l'une des revendications précédentes, **caractérisé en ce qu'**un accès ou une connexion à un réseau partagé ou réseau global (4) est créé pour l'appareil électroménager (3) par le biais du réseau local (2).

16. Procédé selon l'une des revendications précédentes, **caractérisé en ce qu'**on procède à une entrée de données relatives à une personne dans le réseau local (2), ces données étant automatiquement ajoutées au message (9) de l'appareil électroménager (3).

17. Procédé selon la revendication 16, **caractérisé en ce que** les données relatives à une personne servent à déterminer le site (A) de l'appareil électroménager (3).

18. Procédé selon la revendication 16 ou 17, **caractérisé en ce que** l'ajout des données relatives à une personne n'est réalisé qu'après une autorisation donnée par l'utilisateur.

19. Procédé selon l'une des revendications précédentes, **caractérisé en ce qu'**au moins une partie de l'information envoyée par le biais du réseau (2) est préparée et/ou affichée sur un appareil électrique dans le réseau local (2) à l'intérieur d'un foyer sur le site (A).

20. Procédé selon la revendication 19, **caractérisé en ce que** l'appareil électrique est un ordinateur (13) ou un téléviseur (17).

21. Dispositif de commande d'un appareil électroménager sur un site (A), qui est exécuté au moins en partie en tant que commande électronique programmée, l'appareil électroménager (3) étant raccordé à un réseau local (2), pouvant être relié à un prestataire de services (7) par le biais du réseau local (2) et étant exécuté pour recevoir une information de commande (8) du réseau local (2), l'information de commande (8) comprenant des instructions de commande proches de la machine et/ou des programmes partiels et/ou un programme et des moyens d'exploitation et/ou de transformation de l'information de commande (8) en vue de commander l'appareil électroménager (3) étant présents sur le site (A) de l'appareil électroménager (3), **caractérisé en ce que** l'appareil électroménager (3) est exécuté pour l'envoi d'un message (9) au réseau local (2) pour demander l'information de commande (8) et le réseau local (2) est exécuté pour l'envoi du message (9) au prestataire de services (7), et **en ce que** le message (9) contient un catalogue de demande pour l'information de commande (8) en vue de l'élaboration spéciale de l'information de commande (8) sur la base du message (9) chez le prestataire de services (7).

22. Dispositif selon la revendication 21, **caractérisé en ce qu'**un numéro d'appareil individuel de l'appareil électroménager (3) respectif est une adresse au moins à l'intérieur du réseau local (2).

23. Dispositif selon l'une des revendications 21 ou 22, **caractérisé en ce qu'**un moyen pour l'enregistrement et/ou l'appel répété de l'information de commande (8) envoyée est présent dans le réseau local (2).

24. Dispositif selon l'une des revendications 21 à 23, **caractérisé en ce que** la commande de l'appareil électroménager (3) est exécutée pour permettre un transfert au moins partiel de la commande d'appareil à une unité de calculateur externe(6) qui se trouve en contact avec le réseau local (2).

25. Dispositif selon la revendication 24, **caractérisé en ce qu'**un dispositif d'affichage de l'appareil électroménager (3) est exécuté pour la représentation d'une interface graphique utilisateur et/ou pour l'inscription d'éléments de commande de l'appareil électroménager (3).

26. Dispositif selon l'une des revendications 21 à 25, **caractérisé en ce que** le réseau local (2) est exécuté selon une structure en étoile.

27. Dispositif selon l'une des revendications 21 à 26, **caractérisé en ce que** l'appareil électroménager (3) est raccordé au réseau local (2) par le biais d'une liaison de données sans fil.

28. Dispositif selon l'une des revendications 21 à 27, **caractérisé en ce qu'**un accès à un réseau global (4) est prévu au niveau du réseau local (2).

29. Dispositif selon la revendication 28, **caractérisé en ce que** le réseau local (2) est raccordé au réseau global (4) par le biais d'une liaison de données sans fil ou par le biais d'une ligne téléphonique.

30. Dispositif selon l'une des revendications 21 à 29, **caractérisé en ce que** l'appareil électroménager (3) et/ou le réseau local (2) sont reliés au prestataire de services (7) par le biais d'une ligne d'alimentation en courant électrique (16).
